# EUROPEAN PATENT APPLICATION

(11) **EP 1 099 648 A1**
(43) Date of publication of application: **16.05.2001**
(21) Application number: 99901602.5
(22) Date of filing: 29.01.1999
(51) Int. Cl.: B65D 85/60

(54) **LOLLYPOP AND RECEPTACLE COMBINATION**

(71) Applicant: ENRIQUE BERNAT F., S.A., E-08034 Barcelona (ES)
(72) Inventor: BERNAT FONTLLADOSA, Enrique, E-08034 Barcelona (ES)
(86) International application number: ES9900028
(87) International publication number: WO0044647

(57) **Abstract**

The invention relates to a lollypop and receptacle combination comprised of a candy on a stick, at least one accessory and a hollow receptacle receiving the lollypop and the accessories. The lollypop includes an edible body and an elongated stick having an outer end to be held by the user and another end inserted into the edible body for fixing said body to the stick. The accessory can be any object that may be used as a surprise in relation to the lollypop. The hollow receptacle is comprised of a top part and a bottom part that are assembled by pressure. The bottom part includes an aperture whose size makes it possible to insert the stick of the lollypop through said aperture while the outer end of the stick remains outside the receptacle and the edible body of the lollypop remains inside the receptacle when the top and bottom part are joined by pressure. Another characteristic of the invention is that the accessories are comprised of a game set that includes a game board and at least one ludic element, The game board includes flat pieces with complementary structures in such a way that said flat pieces may be assembled by joining said complementary structures.

## Description

### FIELD OF INVENTION

The present invention relates to confectionery containers and more particularly to a lollipop and container combination wherein the container encloses the edible portion of a lollipop together with a play figure accessory.

### BACKGROUND

Lollipops have long been a popular candy for many reasons, including flavor, portability and long-lastingness. As a result of the lollipop's popularity many accessories have been designed to make eating lollipops even more pleasurable. For example, U.S. patents number 5,702,742 and 5,773,058 describe lollipop containers that can be used to store lollipops after manufacturing and after partial consumption, and U.S. patent number 5,209,692 is for a novel lollipop-spinning toy.

While known lollipop accessories have provided certain advantages, they also have their limitations. Specifically, the aforementioned lollipop accessories are often limited to performing one of the following two functions: (1) the accessories can make lollipops more pleasurable to eat by doing away with certain inconveniences inherent in the lollipop, such as the stickiness of a partially-consumed lollipop (see U.S. patents number 5,702,742 and 5,773,058 described herein above); or (2) the accessories can make lollipops more pleasurable to eat by providing an additional entertaining object such as a toy (see U.S. patent number 5,209,692 described herein above).

In view of the limitations on known lollipop accessories, there exists an ongoing need for an all-in-one lollipop container that can do away with certain inconveniences inherent in the lollipop and furthermore provide an additional entertaining object together with the lollipop.

### SUMMARY OF THE INVENTION

Therefore one of the objects of this invention is to provide a new container for used and unused lollipops.

It is a further object of this invention to provide a container and lollipop combination that includes an entertaining accessory.

It is another object of this invention to provide a container and lollipop combination that includes an entertaining accessory that can be used in conjunction with an extendible game board.

The above needs are satisfied and the above objects are achieved by means of a container and lollipop combination that includes a lollipop, at least one accessory, and a hollow container containing the lollipop and accessories. The lollipop comprises an edible body and a long stick with one end for the user to grasp and the other end buried in the edible body to support the edible body on the stick. The accessory may be an item for play such as a small toy or any other object that can be used as a "surprise" in relationship with the lollipop. The hollow container comprises an upper portion and a lower portion that are assembled together to form the container. Both portions feature recesses whereby the portions are mated with one another. The recesses in the two portions are complementary and are dimensioned such that the top portion and the bottom portion can be snapped together along their respective recesses and thus mated. The bottom portion includes an aperture sized such that the lollipop stick may be inserted through the said aperture and thus the distal end of the stick remains outside the container and the edible body of the lollipop remains inside the container when the top and bottom portions are snapped together.

In the preferred embodiment of the invention, the bottom portion of the container includes an outer tubular formation that extends from one wall of the bottom portion. The outer tubular formation defines the aperture in the bottom portion.

In another embodiment of the invention the bottom portion of the container includes an outer tubular formation that extends from the wall of the bottom portion and an inside tubular formation that extends from the wall of the said portion. The said outer and inner tubular formations together make up the aperture in the bottom portion. The container may be covered with a wrapper after the top and bottom portions are snapped together.

Another feature of the invention is that the accessories make up a play set including a game board and at least one play item. The game board includes flat parts with complementary mating formations so that the said parts can be assembled together by connecting their conjunctive elements. In an alternative version of the invention, each of the play items included in the container and lollipop combination has a system for mating to at least one of the flat parts of the game board, such that any play item can be set up on any of the flat parts that have such a mating system.

### DESCRIPTION OF THE DRAWINGS

These and other features, aspects, purposes and advantages of this invention may be better understood by considering the following detailed description, claims and attached drawings (Figures 1 to 8), wherein:
Figure 1 is a perspective drawing of the lollipop pursuant to this invention;
Figure 2 is a perspective drawing of the top and bottom portions of the container pursuant to this invention;
Figure 3 is a perspective drawing of the lollipop in Figure 1 and the container in Figure 2 assembled together;
Figure 4 is a perspective drawing of an accessory that may be used with this invention;
Figure 5 is an exploded cross-section of the lollipop and container combination herein that appears in Figure 3;
Figure 6 is an exploded cross-section showing part of the top portion and part of the bottom portion before they are snapped together;
Figure 7 is a perspective drawing of a game board put together according to another feature of this invention; and
Figure 8 depicts a perspective of two flat parts of the game board of the game that appears unassembled in Figure 7.

It must be understood that the drawings are not to scale and that the embodiments are sometimes illustrated by fragmentary views or diagrams. On some occasions details that are unnecessary for understanding the invention or that hamper the perception of other details may have been omitted. Obviously it must also be understood that the invention is not necessarily limited to the specific embodiments herein illustrated.

Like numerals have been used to identify like parts throughout the Figures.

### DETAILED DESCRIPTION OF THE INVENTION

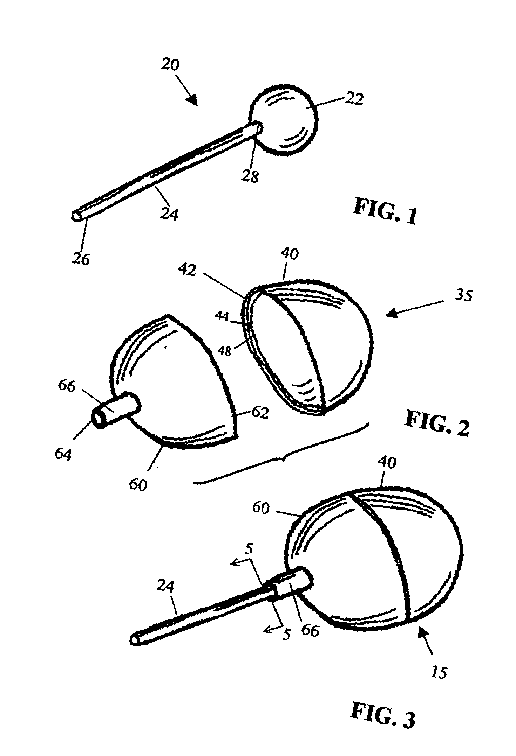

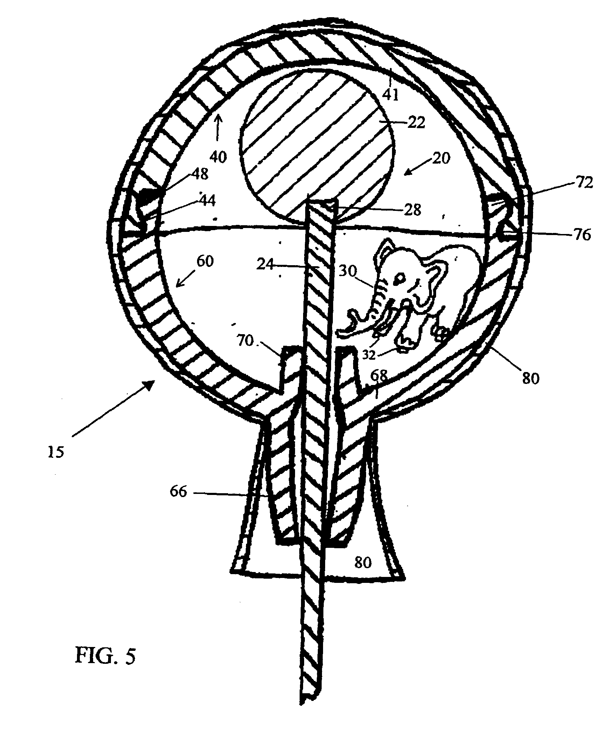

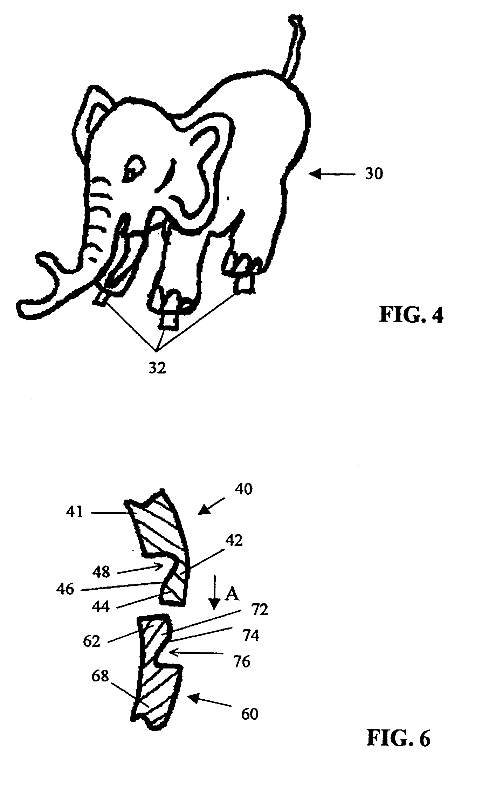

Figures 1 to 6 show the lollipop and container combination 15 pursuant to the invention. Broadly speaking, the lollipop and container combination 15 comprises a lollipop 20 depicted in Figure 1, a container 35 depicted in Figure 2, and an accessory depicted in Figure 4.

The lollipop 20 in Figure 1 comprises an edible body 22 that is integrally connected to a long, rigid stick 24 that has a distal end 26 and a proximal end 28. The proximal end 28 of the stick 24 goes inside and supports the edible body 22 of the lollipop 20. When consuming the lollipop 20, the user grasps the distal end 26 of the stick.

The container 35 in Figure 2 comprises a top portion 40 and a bottom portion 60. In this version of the container 35, the top portion 40 and the bottom portion 60 form a hollow, basically oblong container (see Figure 3) when the two portions 40 and 60 are assembled. However it may be seen that the container 35 herein may form some other shape when the top and bottom portions 40 and 60 are put together. For example the top portion 40 and the bottom portion 60 may be molded such that the hollow container 35 is spherical, egg-shaped, cubic, rectangular or of any other appropriate hollow shape. The preferred material for making top portion 40 and bottom portion 60 is a resistant plastic.

The accessory may be a play item 30, such as the tiny toy in Figure 4, or any other object that can serve as a "surprise" related with the lollipop 20. Therefore the term "accessory" as used in the description or the claims must be understood in its broadest sense to include any object that may serve as a "surprise."

Figures 2, 5 and 6 illustrate the means by which the top portion 40 and bottom portion 60 are fit together to form the hollow container 35. Referring first to Figures 2 and 3, the top portion 40 may be seen to act generally as a lid and the bottom portion 60 may be seen to act generally as a base. In this version of the container 35, the top portion 40 has a notch 42 around its circumference and the bottom portion 60 has a notch 62 around its circumference. Notches 42 and 62 of the top portion 40 and the bottom portion 60 are snapped together to form the hollow container 35.

Examination of the cross-sections in Figures 5 and 6 shows that the top portion 40 has a wall 41 that is generally of a uniform thickness. The wall 41 ends in the notch 42 around the circumference of the top portion 40. The notch 42 of the top portion 40 may be observed to have a surface with a transverse cut thinner than the wall 41 of the top portion 40. The notch 42 of the top portion 40 has an inner face 46 with a groove 48 around its circumference and a rib 44 around its circumference that protrudes inward from the inner face 46.

Still referring to Figures 5 and 6, the bottom portion 60 may be seen to have a wall 68 that is generally of a uniform thickness. The wall 68 ends in the notch 62 around the circumference of the bottom portion 60. The notch 62 of the bottom portion 60 may be observed also to have a surface with a transverse cut thinner than the wall 68 of the bottom portion 60. The notch 62 of the bottom portion 60 has an outer face 74 with a groove 76 around its circumference and a rib 72 around its circumference that protrudes outward from the outer face 74.

The manner in which the hollow container is assembled can be seen better in the cross-section in Figure 6. The top portion 40 is set on top of the bottom portion 60 such that the notch 42 of the top portion 40 is aligned and practically in contact with the notch 62 of the bottom portion 60. Then the top portion 40 is pressed downward as shown by arrow A such that the rib 44 of the notch 42 of the top portion 40 slides over the rib 72 of the notch 62 of the bottom portion 60. Due to the complementary configuration of notches 42 and 62 of top portion 40 and bottom portion 60, when the aforesaid portions are pressed together, the rib 44 of the top portion 40 engages with the groove 76 of the bottom portion 60, and the rib 72 of the bottom portion 60 engages with the groove 48 of the top portion 40, when the bottom portion 60 and the top portion 40 are mated. Due to the flexible nature of the notches 42 and 62 of the top portion 40 and the bottom portion 60, the said portions can be snapped or pressed together without the need to apply significant force. Furthermore by pressing the connection between the top and bottom portions with the hands, the ribs 44 and 72 of each of the said portions can be disengaged, thus separating the two portions, In this fashion the top portion and bottom portion can be assembled and disassembled repeatedly, thus providing a container for partially-consumed lollipops.

Referring to Figures 2 and 5, the bottom portion 60 of the container 35 may be seen to include an outer tubular formation 66 that extends outward from the wall 68 of the bottom portion 60. The said outer tubular formation 66 forms a cylindrical aperture 64 that also pierces the wall 68 of the bottom portion 60. Optionally the bottom portion 60 may also include an inner tubular formation 70 that extends inward from the wall 68 of the bottom portion 60. In this version of the bottom portion 60, the said inner tubular formation 70 and outer tubular formation 66 together form the aperture 64 that pierces the wall 68 of the bottom portion 60.

The dimensions of the aperture 64 in the bottom portion 60 are such that the cross-section of the said aperture 64 is larger than the cross-section of the stick 24 of the lollipop 20. In this configuration the inner wall of the aperture 64 accommodates the diameter of the stick 24. Preferably the dimensions of the aperture 64 in the bottom portion 60 are such that the cross-section of the said aperture 64 is only slightly larger than the cross-section of the stick 24 of the lollipop 20, thus reducing as far as possible the horizontal movement of the lollipop 20 inside the aperture 64. It is even more preferable for the dimensions of the aperture 64 in the bottom portion 60 to be such that the cross-section of the said aperture 64 is substantially similar to the cross-section of the stick 24 of the lollipop 20, so that the said stick 24 can be slid securely into the aperture 64. With this configuration all horizontal and vertical movement of the lollipop 20 inside the aperture 64 is in fact eliminated.

The drawing shows how the outer tubular formation 66 of the bottom portion 60 serves also to minimize even further the movement of the lollipop 20 inside the container 35 when the lollipop and container combination 15 is assembled. Figure 5 shows how the long aperture 64 formed by the outer tubular formation 66 may be of a considerable length compared to the stick 24 of the lollipop 20. With this configuration, the lengthened inner wall of the aperture 64 keeps the axis of the stick 24 of the lollipop 20 aligned with the axis of the container 35 and therefore the edible body 22 of the lollipop 20 remains centered in the hollow container 35, without significant movement inside the said container 35.

In order to assemble the lollipop and container combination 15, first the accessory is placed in the bottom portion 60 of the container 35. Next the stick 24 of the lollipop 20 is slid into the aperture 64 in the bottom portion 60 such that the distal end 26 of the stick 24 passes through the said aperture 64 until it becomes visible below the outer tubular formation 66. Then the top portion 40 is snapped onto the bottom portion 60 as described above to make the lollipop and container combination 15 wherein the distal end 26 of the stick 24 remains outside the container 35 and the edible body 22 of the lollipop 20 remains inside the container 35 together with the accessory. Alternatively, after the lollipop and container combination 15 is assembled, the container 35 may be covered with a wrapper 80 as shown in Figure 5.

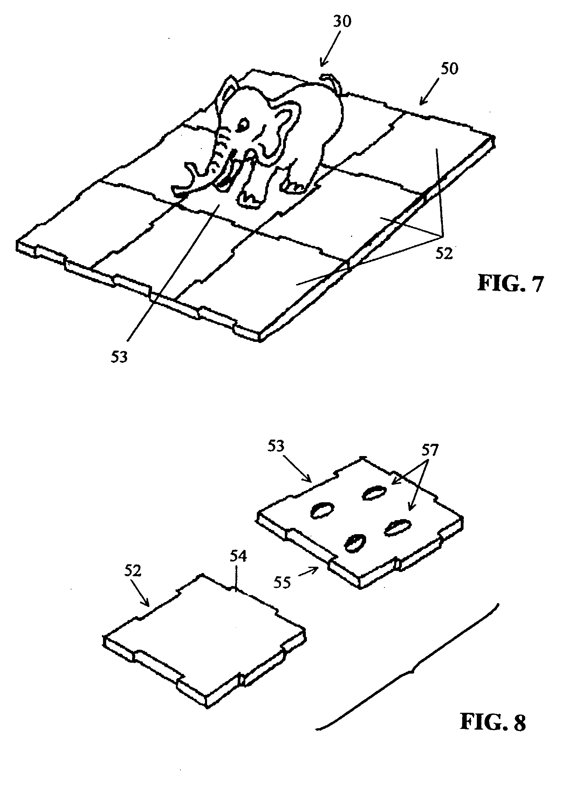

Another aspect of this Invention according to Figures 4, 7 and 8 may be described. It has been discovered that the lollipop and container combination 15 detailed herein above can be turned to advantage as part of a play-set that includes a play item 30, such as the tiny toy seen in Figure 4, and a game board 50 as shown in Figures 7 and 8. Alternatively the play item 30 may also include protuberances 32 which extend downward from the bottom of the play item 30 Furthermore the play item 30 may include a number of parts that are put together to form the play item. This version of the play item 30 would be especially advantageous when the said play item 30 is too large to fit inside the hollow container 35.

Returning now to Figures 7 and 8, it can be seen that the game board 50 can be assembled with a first type of flat part 52 and optionally with a second type of flat part 53. Both types of flat parts 52 and 53 incorporate the means for coupling the said parts to an assembled game board 50. Especially Figure 8 illustrates how the flat parts 52 and 53 have tangs 54 that extend outward from some sides of the flat part and recesses 55 on other sides of the flat parts. The tangs 54 and the recesses 55 of the flat parts 52 and 53 are configured to fit one another, such that the flat parts 52 and 53 can be mated when they lie on a flat surface by inserting the tangs 54 in the recesses 55. The tangs 54 and the recesses 55 may be of any shape provided that the said tangs and recesses fit together. Moreover the flat parts 52 and 53 may be of any shape provided that the said parts fit inside the hollow container 35 together with the lollipop 20 and the play item 30.

Figure 8 illustrates how the second alternative type of flat part 53 also includes notches 57 on its top surface. These notches 57 in the second type of flat part 53 are distanced and shaped to match up with the optional protuberances 32 that extend downward from the bottom of the play item 30, as shown in Figure 4. With this configuration the play item 30 can be press-fitted onto the flat part 53 as illustrated in Figure 7. Of course the play item 30 may have no such protuberances 32, in which case the said item 30 is simply placed on top of the assembled game board 50.

There is an infinite number of configurations for the play set concerned herein, such that a user can combine different play items 30 with different configurations of the first type of flat part 52, and optionally of the second type of flat part 53. Furthermore each of the flat parts 52 and 53 may be decorated differently on their top surface such that an infinite variety of flat parts can be assembled. The user will preferably collect various play items 30 as he or she buys various lollipop and container combinations 15 and then assembles these various play items 30 on various flat parts 52 that make up the game board 50. A full set may also be assembled, as shown in Figure 7, when buying the lollipop and container combination 15.

In this fashion is provided an improved lollipop and container combination wherein the container encloses the edible portion of the lollipop and an accessory such as a play item. The invention satisfies the need for a new container for consumed and unconsumed lollipops that includes an entertaining accessory that can be used in conjunction with an extendible game board. Furthermore the configuration of the container has been improved to limit the movement of the lollipop inside the container during shipment, thus solving a problem of other lollipop containers.

Although the invention has been described in great detail in relationship with certain preferred embodiments, an expert on the subject will understand that this invention can be rendered in fashions different from those herein set forth; these preferred embodiments have been set forth herein merely to illustrate the invention, not to limit its embodiments. Therefore the scope of the attached claims should not be restricted to the preferred embodiments herein set forth.

## Claims

1. A lollipop and container combination comprising a lollipop (20) that includes an edible body (22) and a long stick (24) which stick (24) has one end (26) for the user to grasp and one end (28) inserted inside the edible body (22) to hold the body (22) on the stick (24) and at least one accessory and a hollow container (35) that holds the lollipop (20) and each of the accessories which container (35) comprises a top portion (40) and a bottom portion (60) each of which (40) and (60) incorporates a notch (42, 62) with an engaging formation, these formations being of complementary dimensions such that the top portion (40) and the bottom portion (60) can be snapped together along their respective notches (42, 62) and the bottom portion (60) includes an aperture (64) sized such that the stick (24) can be inserted through the aperture (64) such that the distal end (26) of the stick (24) remains outside the container (35) and the edible body (22) of the lollipop (20) remains inside the said container (35) when the bottom portion (60) and the top portion (40) are snapped together.

2. The lollipop and container combination as in claim 1 above wherein the bottom portion (60) includes an outer tubular formation (66) that extends outward from the wall (68) of the bottom portion (60) and thus the said outer tubular formation (66) forms the aperture (64) in the bottom portion (60).

3. The lollipop and container combination as in claim 2 above wherein the bottom portion (60) includes an inner tubular formation (70) that extends inward from the wall (68) of the said bottom portion (60) and thus the said inner tubular formation (70) and outer tubular formation (66) form the aperture (64) in the bottom portion (60).

4. The lollipop and container combination as in any of the claims herein above where: the engaging formation of the notch (42) of the top portion (40) comprises a rib (44) that protrudes inward from an inner face (46) of the notch (42) of the top portion (40) and a depression (48) in the inner wall (46) of the said notch (42) in the top portion (40), and the engaging formation of the notch (62) of the bottom portion (60) comprises a rib (72) that protrudes outward from an outer face (74) of the said notch (62) in the bottom portion (60) and a depression (76) in the outer face (74) of the said notch (62) of the bottom portion (60), and the rib (44) of the top portion (40) fits into the depression (76) in the bottom portion (60) and the rib (72) of the bottom portion (60) fits into the depression (48) in the top portion (40) when the bottom portion (60) and the top portion (40) are snapped together.

5. The lollipop and container combination as in claim 4 above wherein at least one of the accessories is a play item (30).

6. The lollipop and container combination as in claim 4 above wherein there are at least two accessories and at least one of the said accessories is a play item (30) and at least one other is a game board (50).

7. The lollipop and container combination as in claim 6 above wherein the game board (50) is comprised of a variety of flat parts (52) having conjunctive formations that fit one another (54, 55) such that the flat parts (52) can be put together by engaging the said conjunctive formations (54, 55) with one another.

8. The lollipop and container combination as in claim 7 above wherein the container (35) is covered with a wrapper (80) once the bottom portion (60) and the top portion (40) have been pressed together.

9. The lollipop and container combination as in claim 8 above wherein the container (35) is oblong when the top portion (40) and the bottom portion (60) are snapped together.

10. The lollipop and container combination as in claim 9 above wherein each of the play items (30) has at least one engaging formation (32) and at least one of the flat parts (53) has at least one engaging formation (57), and the engaging formations (32) of each play item (30) fit into the engaging formations (57) of each flat part (53) such that any play item (30) can be assembled with any of the flat parts (53) that has an engaging formation (57) when the complementary engaging formations are engaged (32, 57) with one another.
